Europäisches Patentamt

European Patent Office

Office européen des brevets

(19)

(11) Veröffentlichungsnummer: **0 474 142 A2**

# EUROPÄISCHE PATENTANMELDUNG

(12)

(21) Anmeldenummer: **91114691.8**

(22) Anmeldetag: **31.08.91**

(51) Int. Cl.5: **B65G 47/14**

(30) Priorität: **05.09.90 DE 4028144**

(43) Veröffentlichungstag der Anmeldung:
**11.03.92 Patentblatt 92/11**

(84) Benannte Vertragsstaaten:
**AT CH DE ES FR GB LI SE**

(71) Anmelder: **EC-MONTAGEAUTOMATEN HERBERT ECCARD GMBH**
**Dammstrasse 7**
**W-7056 Weinstadt(DE)**

(72) Erfinder: **Eccard, Herbert, Ing. VDI**
**Schwalbenweg 8**
**W-7053 Kernen-Stetten(DE)**
Erfinder: **Walker, Robert**
**Riedweg 8**
**W-7062 Rudersberg-Krehwinkel(DE)**

(74) Vertreter: **Wolf, Eckhard, Dr. et al**
**Patentanwälte Dr. Eckhard Wolf, Dr.**
**Johannes Lutz, Eugensplatz 5, Postfach 13**
**10 01**
**W-7000 Stuttgart 1(DE)**

(54) Vorrichtung zum Sortieren von lose geschütteten Werkstücken.

(57) Die Erfindung bezieht sich auf einen Zentrifugalsortierer mit einer schräg ausgerichteten, motorisch angetriebenen Zentrifugalscheibe (13) und einem im wesentlichen horizontal ausgerichteten, die Zentrifugalscheibe (13) umgebenden Umlaufring (17). Im Bereich der Übergangsstelle (29) zwischen Zentrifugalscheibe (13) und Umlaufring (17) befindet sich ein auf die lagerichtige Ausrichtung der ankommenden Werkstücke ansprechendes Sortierorgan und der Eingang (26) eines sich entlang dem Umlaufring (17) erstreckenden Führungskanal (25), der ausgangsseitig in einen Ausgangsförderer mündet.

Der Führungskanal (25) erstreckt sich über einen Kreis- oder Spiralbogen von mindestens 200° entlang dem Umlaufring, während über den Ausgangsförderer dafür gesorgt wird, daß sich im Führungskanal (25) ein Rückstau bildet. Dadurch werden etwaige Lücken zwischen den Werkstücken, die am Eingang des Förderkanals (25) aufgrund der statistischen Ausrichtung der ankommenden Werkstücke zwangsläufig entsteht, geschlossen. Dem Umlaufring (17) kommt somit die Funktion eines die Werkstücke verdichtenden Pufferspeichers zu.

Fig. 1

Die Erfindung betrifft eine Vorrichtung zum Sortieren von lose geschütteten Werkstücken mit einer den Boden eines Topfes zur Aufnahme der Werkstücke bildenden, gegenüber der Horizontalen geneigten, motorisch angetriebenen Zentrifugalscheibe, einem im wesentlichen horizontal ausgerichteten, die Zentrifugalscheibe umgebenden und diese in ihrem höchsten Umfangsabschnitt unter Bildung einer Übergabestelle für die unter der Einwirkung der Zentrifugalkraft aus dem Topf nach außen geförderten Werkstücke tangierenden, motorisch angetriebenen Umlaufring, einem in der Nähe der Übergabestelle angeordneten, auf die lagerichtige Ausrichtung der ankommenden Werkstücke ansprechenden Sortierorgan und einem sich eingangsseitig in Umlaufrichtung des Umlaufrings hinter dem Sortierorgan anschließenden, zur Oberfläche des Umlaufrings hin offenen und ausgangsseitig in einen Ausgangsförderer mündenden Führungskanal für die lagerichtig hintereinander ankommenden Werkstücke.

Bei einem bekannten Scheibenförderer dieser Art erstreckt sich der Führungskanal über ein kurzes Bogenstück über den Umlaufring und mündet in der Nähe des beispielsweise als mechanische Sortierschikane ausgebildeten Sortierorgans in die Ausgangsförderstrecke ein, so daß der Umlaufring auf dem überwiegenden Teil seines Umfangs leer umläuft. Da die von der Zentrifugalscheibe aus dem Topf nach außen geförderten Werkstücke nach den Regeln der Wahrscheinlichkeit lagerichtig und nicht lagerichtig ausgerichtet sind, kommt es immer wieder vor, daß längere Werkstücksequenzen mit nicht lagerichtiger Ausrichtung am Sortierorgan abgewiesen werden und sich dadurch Lücken im Förderstrom hinter der Sortierorgan bilden. Dieser Nachteil wirkt sich vor allem bei hohen Förderleistungen in der Größenordnung von 1.000 Werkstücken und mehr nachteilig auf die effektive Leistungsfähigkeit aus. Es ist zwar denkbar, die Lücken zwischen den Werkstücken durch eine Pufferstrecke im Bereich des Ausgangsförderers zu schließen. Je größer jedoch die Förderleistung ist, desto größer ist der Platzbedarf einer solchen Pufferstrecke und der hierfür erforderliche konstruktive und bauliche Aufwand.

Ausgehend hiervon liegt der Erfindung die Aufgabe zugrunde, eine Sortiervorrichtung der eingangs angegebenen Art zu entwickeln, die bei kompakter Bauweise eine lückenfreie Ausgabe von Werkstücken auf den Ausgangsförderer auch bei sehr hohen Förderleistungen gewahrleistet.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Der Erfindung liegt vor allem der Gedanke zugrunde, daß der Umlaufring nicht nur die rasche Abförderung der ankommenden Werkstücke auf die Ausgangsförderstrecke ermöglicht, sondern zugleich als Pufferstrecke für die im Förderkanal hintereinander ankommenden Werkstücke ausgebildet werden kann. Um dies zu erreichen, wird gemäß der Erfindung einmal vorgeschlagen, daß der Führungskanal sich über einen Bogen von mindestens 200° entlang dem Umlaufring erstreckt. Wenn dazuhin die auf dem Umlaufring als Reibunterlage aufliegenden Werkstücke im Mittel langsamer als der Umlaufring relativ zum Führungskanal bewegbar ist, wird erreicht, daß die an der Ausgangsseite des Führungskanals lückenfrei ankommenden Werkstücke im Bereich des Führungskanals auf dem darunter hinweggleitenden Umlaufring zurückgestaut und Lücken zwischen den dort vorhandenen Werkstücken geschlossen werden. Vorteilhafterweise kann dies dadurch bewerkstelligt werden, daß die Umfangsgeschwindigkeit des Umlaufrings beispielsweise um den Faktor 1,5 bis 3 größer als die Fördergeschwindigkeit des Ausgangsförderers ist.

Gemäß einer bevorzugten Ausgestaltung der Erfindung erstreckt sich der Förderkanal über einen Kreisbogen von 220 bis 340° entlang dem Umlaufring. Bei größeren Förderleistungen kann es von Vorteil sein, wenn sich der Förderkanal über einen Spiralbogen von mehr als 360°, gegebenenfalls sogar mehr als 720° entlang dem Umlaufring erstreckt, so daß sich nahezu ohne zusätzlichen Platzaufwand eine an die Förderleistung angepaßte, relativ lange Pufferstrecke ergibt.

Eine weitere Verbesserung der Leistungsfähigkeit kann dadurch erzielt werden, daß die Zentrifugalscheibe und der Umlaufring unabhängig voneinander, vorzugsweise mit unterschiedlicher Umlaufgeschwindigkeit antreibbar sind.

Das Sortierorgan kann beispielsweise als an die Werkstückform angepaßte Schikane ausgebildet sein. Falls erforderlich, können auch mehrere hintereinander angeordnete Schikanen vorgesehen werden. Bei mechanisch nicht ohne weiteres abtastbaren Werkstückformen kann das Sortierorgan einen optoelektronischen Sensor und eine über den Sensor ansteuerbare Weiche aufweisen.

Der Führungskanal weist zweckmäßig zwei einen seitlichen Abstand voneinander aufweisende Führungswände oder Führungsleisten auf, die entweder kreisförmig oder spiralig gebogen sind.

Gemäß einer weiteren vorteilhaften Ausgestaltung der Erfindung ist der die Zentrifugalscheibe enthaltende Topf an einem Maschinengestell angeordnet, an welchem der Umlaufring drehbar geführt ist und ein den Führungskanal und/oder das Sortierorgan aufweisender Träger lösbar von oben her befestigbar ist.

Im folgenden wird die Erfindung anhand zweier in der Zeichnung in schematischer Weise dargestellter Ausführungsbeispiele näher erläutert. Es zeigen

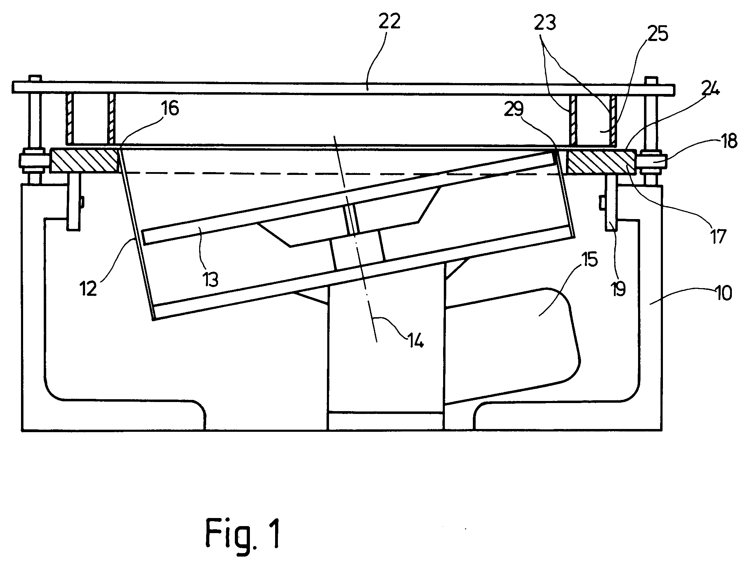

Fig. 1 eine Seitenansicht eines Zentrifugalscheibensortierers in teilweise geschnittener Darstellung;

Fig. 2 eine Draufsicht auf den Zentrifugalscheibensortierer nach Fig. 1;

Fig. 3 ein abgewandeltes Ausführungsbeispiel eines Zentrifugalscheibensortierers in einer der Fig. 2 entsprechenden Draufsicht.

Der in der Zeichnung dargestellte Zentrifugalscheibensortierer ist zum Sortieren, Vereinzeln und Puffern von lose geschütteten Werkstücken bestimmt, die in vorgegebener lagerichtiger Ausrichtung möglichst lückenlos an einen Ausgangsförderer zur Weiterverarbeitung in einem Montageautomaten auszugeben sind.

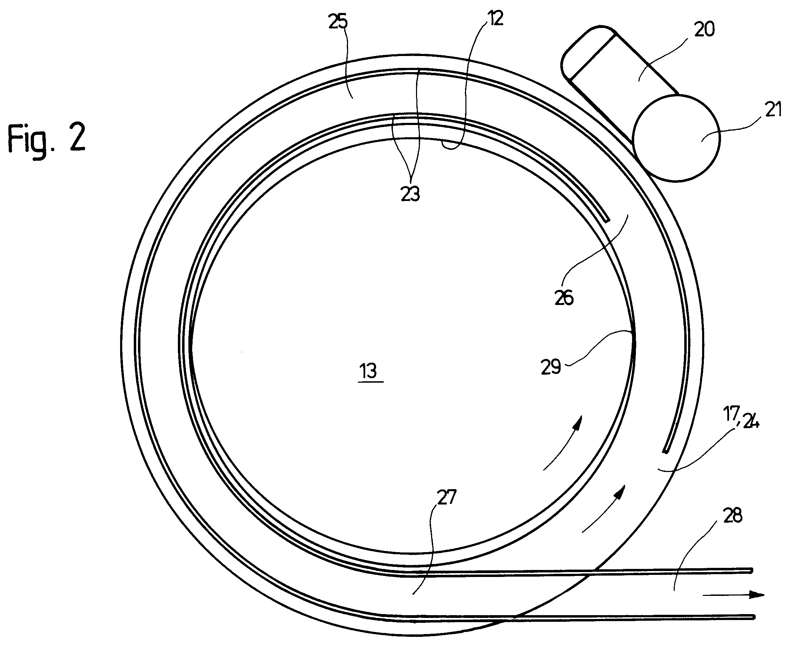

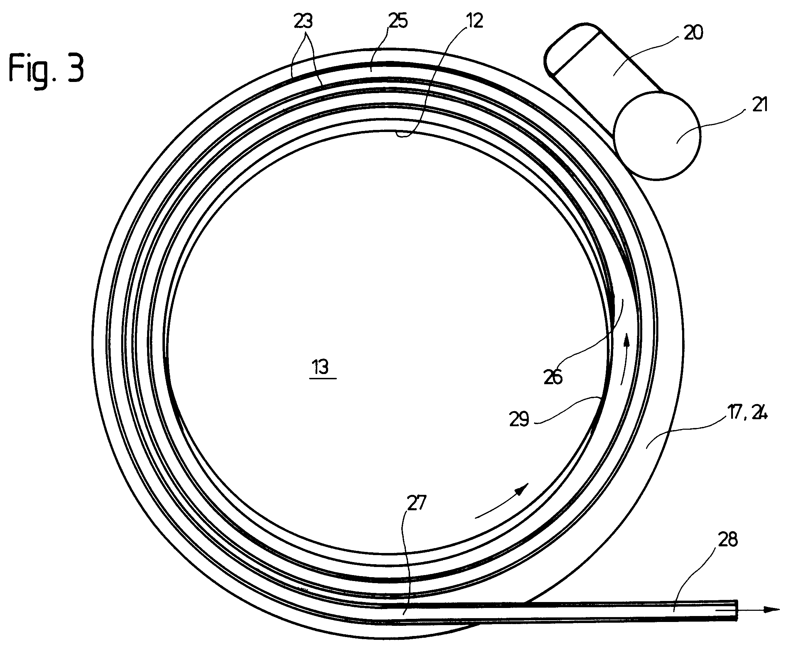

Die Vorrichtung besteht im wesentlichen aus einem stationär aufstellbaren Maschinengestell 10, einem am Maschinengestell angeordneten, nach oben offenen schräg ausgerichteten zylindrischen Topf 12, dessen Boden durch eine gegenüber der Horizontalen geneigte Zentrifugalscheibe 13 gebildet ist, die um ihre schräge Achse 14 mittels eines Elektromotors 15 antreibbar ist und die in ihrem höchsten Umfangsabschnitt 29 bis zur Oberkante 16 des Topfes 12 reicht. An dem Maschinengestell 10 ist weiter ein horizontal ausgerichteter, den Topf 12 im Bereich der Topfoberkante 16 umgebender Umlaufring auf radial und axial wirkenden Rollenlagern 18,19 drehbar gelagert. Der Umlaufring 17 ist mittels eines vom Motor 15 unabhängigen Elektromotors 20 und einem am Umfang des Umlaufrings angreifenden Reib- oder Zahnrad 21 antreibbar. An der Oberseite des Maschinengestells 10 ist ein Träger 22 lösbar befestigt, der mit nach unten weisenden, im Abstand voneinander angeordneten, kreisförmig oder spiralig gekrümmten Führungswänden 23 versehen ist. Die Führungswände 23 begrenzen einen zur Oberfläche 24 des Umlaufrings hin nach unten offenen Führungskanal 25 für die Werkstücke. Bei dem in Fig. 2 gezeigten Ausführungsbeispiel erstreckt sich der Führungskanal zwischen seiner Eingangsstelle 26 und seiner im Bereich des Umlaufrings tangential nach außen weisenden Ausgangsstelle 27 im wesentlichen kreisbogenförmig über einen Winkel von 260° entlang dem Umlaufring, während im Falle der Fig. 3 der Förderkanal einen Spiralbogen von etwa 620° bildet. Ausgangsseitig mündet der Führungskanal über eine Tangentialstrecke 28 in einen nicht dargestellten Ausgangsförderer.

Die innerhalb des Topfes 12 in loser Schüttung angeordneten, nicht dargestellten Werkstücke gelangen unter der Einwirkung der Zentrifugalkraft der drehenden Zentrifugalscheibe radial nach außen und im Bereich der Übergabestelle 29 über den Topfrand 16 auf den Umlaufring 17. Die ankommenden Werkstücke werden dort durch ein nicht dargestelltes, beispielsweise als Schikane ausgebildetes Sortierorgan hinsichtlich ihrer lagerichtigen Ausrichtung abgetastet und dabei entweder unter Rückförderung in den Topf 12 abgewiesen oder auf dem Umlaufring 17 in den Förderkanal 25 weitergefördert. Durch einen über den langsamer bewegten Ausgangsförderer hervorgerufenen Rückstau werden etwaige Lücken zwischen den Werkstücken im Bereich des Förderkanals durch den schneller laufenden, als Reibunterlage für die Werkstücke dienenden Umlaufring 17 geschlossen.

Zusammenfassend ist folgendes festzustellen: Die Erfindung bezieht sich auf einen Zentrifugalsortierer mit einer schräg ausgerichteten, motorisch angetriebenen Zentrifugalscheibe 13 und einem im wesentlichen horizontal ausgerichteten, die Zentrifugalscheibe 13 umgebenden Umlaufring 17. Im Bereich der Übergangsstelle 29 zwischen Zentrifugalscheibe 13 und Umlaufring 17 befindet sich ein auf die lagerichtige Ausrichtung der ankommenden Werkstücke ansprechendes Sortierorgan und der Eingang 26 eines sich entlang dem Umlaufring 17 erstreckenden Führungskanal 25, der ausgangsseitig in einen Ausgangsförderer mündet. Der Führungskanal 25 erstreckt sich über einen Kreis- oder Spiralbogen von mindestens 200° entlang dem Umlaufring, während über den Ausgangsförderer dafür gesorgt wird, daß sich im Führungskanal 25 ein Rückstau bildet. Dadurch werden etwaige Lücken zwischen den Werkstücken, die am Eingang des Förderkanals 25 aufgrund der statistischen Ausrichtung der ankommenden Werkstücke zwangsläufig entsteht, geschlossen. Dem Umlaufring 17 kommt somit die Funktion eines die Werkstücke verdichtenden Pufferspeichers zu.

**Patentansprüche**

1. Vorrichtung zum Sortieren von lose geschütteten Werkstücken mit einer den Boden eines Topfes zur Aufnahme der Werkstücke bildenden, gegenüber der Horizontalen geneigten, motorisch angetriebenen Zentrifugalscheibe, einem im wesentlichen horizontal ausgerichteten, die Zentrifugalscheibe umgebenden und diese in ihrem höchsten Umfangsabschnitt unter Bildung einer Übergabestelle für die unter der Einwirkung der Zentrifugalkraft aus dem Topf nach außen geförderten Werkstücke tangierenden, motorisch angetriebenen Umlaufring, einem in der Nähe der Übergabestelle angeordneten, auf die lagerichtige Ausrichtung der ankommenden Werkstücke ansprechenden Sortierorgan und einem sich eingangsseitig in Umlaufrichtung des Umlaufrings hinter dem Sortierorgan anschließenden, zur Oberfläche des Umlaufrings hin offenen und ausgangsseitig in einen Ausgangsförderer mündenden Führungskanal für die lagerichtig ankommenden Werkstücke, **dadurch gekennzeichnet,** daß der Führungskanal (25) sich über einen Bogen von mindestens 200° entlang dem Umlaufring (17) erstreckt und daß die auf dem Umlaufring (17) als Reibunterlage aufliegenden Werkstücke unter Bildung eines Rückstaus im Mittel langsamer als der Umlaufring (17) relativ zum Führungskanal (25) bewegbar sind.

2. Vorrichtung nach Anspruch 1, **dadurch gekennzeichnet,** daß der Führungskanal (25) sich über einen Kreisbogen von 220 bis 340° entlang dem Umlaufring (17) erstreckt.

3. Vorrichtung nach Anspruch 1, **dadurch gekennzeichnet,** daß der Führungskanal (25) sich über einen Spiralbogen von mehr als 360° entlang dem Umlaufring (17) erstreckt.

4. Vorrichtung nach Anspruch 3, **dadurch gekennzeichnet,** daß der Führungskanal (25) sich über einen Spiralbogen von mehr als 600°, gegebenenfalls von mehr als 720° entlang dem Umlaufring (17) erstreckt.

5. Vorrichtung nach einem der Ansprüche 1 bis 4, **dadurch gekennzeichnet,** daß die Zentrifugalscheibe (13) und der Umlaufring (17) unabhängig voneinander, vorzugsweise mit unterschiedlicher Umlaufgeschwindigkeit antreibbar sind.

6. Vorrichtung nach einem der Ansprüche 1 bis 5, **dadurch gekennzeichnet,** daß das Sortierorgan als an die Werkstückform angepaßte Schikane ausgebildet ist.

7. Vorrichtung nach einem der Ansprüche 1 bis 5, **dadurch gekennzeichnet,** daß das Sortierorgan einen optoelektronischen Sensor und eine über den Sensor ansteuerbare Weiche aufweist.

8. Vorrichtung nach einem der Ansprüche 1 bis 7, **dadurch gekennzeichnet,** daß der Führungskanal (25) zwei einen seitlichen Abstand voneinander aufweisende Führungswände (23) oder Führungsleisten aufweist.

9. Vorrichtung nach einem der Ansprüche 1 bis 8, **dadurch gekennzeichnet,** daß der die Zentrifugalscheibe (13) enthaltende Topf (12) an einem Maschinengestell (10) angeordnet ist, daß der Umlaufring (17) an dem Maschinengestell (10) drehbar geführt ist und daß der Führungskanal (25) und/oder das Sortierorgan an einem von oben her lösbar am Maschinengestell (10) befestigbaren Träger (22) angeordnet sind.

10. Vorrichtung nach einem der Ansprüche 1 bis 9, **dadurch gekennzeichnet,** daß der Führungskanal (25,28) im wesentlichen tangential zum Umlaufring (17) in den Ausgangsförderer mündet.

11. Vorrichtung nach einem der Ansprüche 1 bis 10, **dadurch gekennzeichnet,** daß die Umfangsgeschwindigkeit des Umlaufrings größer als die Fördergeschwindigkeit des Ausgangsförderers ist.

12. Vorrichtung nach Anspruch 11, **dadurch gekennzeichnet,** daß die Umfangsgeschwindigkeit des Umlaufrings um den Faktor 1,5 bis 3, vorzugsweise um den Faktor 2 größer als die Fördergeschwindigkeit des Ausgangsförderers ist.

Fig. 1

EP 0 474 142 A2

Fig. 2

EP 0 474 142 A2

Fig. 3